# EUROPEAN PATENT APPLICATION

(11) **EP 1 429 546 A1**
(43) Date of publication of application: **16.06.2004**
(21) Application number: 02762870.0
(22) Date of filing: 27.08.2002
(51) Int. Cl.: H04N 5/44, H04N 5/445, H04N 7/08, H04N 7/173, A63F 13/00, A63F 13/12

(54) **BROADCAST TUNER, BROADCAST SYSTEM, PROGRAM, AND RECORDING MEDIUM**

(30) Priority: 27.08.2001 JP 2001256838
(71) Applicant: Aruze Corporation, Tokyo 135-0063 (JP); Seta Corporation, Tokyo 135-0063 (JP)
(72) Inventor: FUJIMOTO, Jun c/o Aruze Corporation, Tokyo 135-0063 (JP)
(74) Representative: Grünecker, Kinkeldey, Stockmair & Schwanhäusser Anwaltssozietät
(86) International application number: PCT/JP2002/008615
(87) International publication number: WO 2003/019935

(57) **Abstract**

It is an object of the invention to provide a broadcast tuner and a broadcast system, which are capable of showing a broadcast picture transmitted by a broadcasting station and a game picture of a video game simultaneously on a receiver. The present invention comprises a broadcasting-reception means to receive a broadcast signal transmitted by a broadcasting station, a picture-reproducing means to reproduce a broadcast picture from the received broadcast signal, a first picture memory to store the broadcast picture reproduced by the picture-reproducing means, a game picture-reception means to receive a game picture generated by a game machine which executes a game program in which the contents of the game are described, a second picture memory to store the game picture, and a picture-combining means to combine the broadcast picture stored in the first picture memory and the game picture stored in the second picture memory, and to output the combined picture to a receiver.

## Description

### Technical Field

The present invention relates to a broadcast tuner, a broadcast system, a program and a recording medium, which combine a broadcast picture and a picture of a video game.

### Background Art

As a type of television broadcasting, broadcasting by ground wave, broadcasting by cable television (CATV), and broadcasting by Broadcasting Satellite (hereinafter referred to as BS) or Communication Satellite (hereinafter referred to as CS), etc. are known. Within these types of broadcasting, delivering multi-channels using digital technology whereby new broadcasting services such as character broadcasting, data broadcasting, a bi-directional service and the Internet-related services, etc., are used, have attracted attention.

On the other hand, a home video game system on which various games can be running with a connection to a television that also receives television broadcasting is known. Since the video game system can show a game picture on the television by outputting a video signal, it is possible to provide a position to play a game easily without a special display unit.

However, since a conventional video game system occupies the television while playing a game, there is a problem in that the television is not able to show the television broadcast picture.

Further, while the television shows the television broadcast picture, there is a problem in that playing a game using the video game system is not possible.

The present invention has been made in view of the above circumstances, and thus has an object of providing a broadcast tuner, a broadcast system, program and recording medium, which are capable of showing a broadcast picture transmitted by a broadcasting station and a game picture of a video game system simultaneously on a television.

### Disclosure of Invention

The first gist of the present invention is a broadcast tuner comprising a broadcasting-reception means to receive a broadcast signal transmitted by a broadcasting station, a picture-reproducing means to reproduce a broadcast picture from the received broadcast signal, a first picture memory to store the broadcast picture reproduced by the picture-reproducing means, a game picture-reception means to receive a game picture generated by a game machine which executes a game program in which the contents of the game are described, a second picture memory to store the game picture, and a picture-combining means to combine the broadcast picture stored in the first picture memory and the game picture stored in the second picture memory, and to output the combined picture to a receiver.

According to the gist, since the picture-combining means combines the broadcast picture stored in the first picture memory and the game picture stored in the second picture memory, and outputs the combined picture to the receiver, the broadcast picture and the game picture can be simultaneously shown on the receiver.

The second gist of the present invention is a broadcast tuner comprising a broadcasting-reception means to receive a broadcast signal transmitted by a broadcasting station, a picture-reproducing means to reproduce a broadcast picture from the received broadcast signal, a first picture memory to store the broadcast picture reproduced by the picture-reproducing means, a game memory to store a game program in which the contents of the game are described, a game-execution means to execute the game program stored in the game memory, a second picture memory to store a game picture generated by execution of the game program by the game-execution means, and a picture-combining means to combine the broadcast picture stored in the first picture memory and the game picture stored in the second picture memory, and to output the combined picture to a receiver.

According to the gist, since the picture-combining means combines the broadcast picture stored in the first picture memory and the game picture stored in the second picture memory, and outputs the combined picture to the receiver, the broadcast picture and the game picture can be simultaneously shown on the receiver.

According to the gist, since the game-execution means executes the game program stored in the game memory, a game can be executed without the connection of a game system.

The third gist of the present invention is, according to the first or second gist of the present invention, that the picture-combining means combines the game picture and the broadcast picture so as to show a picture of a corresponding area of the broadcast picture on an area of the game picture, which satisfies prescribed conditions.

According to the gist, since the picture-combining means combines the game picture and the broadcast picture so as to show a picture of a corresponding area of the broadcast picture on an area of the game picture, which satisfies prescribed conditions, the ability to combine the broadcast picture and the game picture can be increased.

The fourth gist of the present invention is, according to the first or second gist of the present invention, that the picture-combining means changes an area of the game picture which satisfies prescribed conditions so as to be semi-transparent and combines the game picture and the broadcast picture so as to show a picture of a corresponding area of the broadcast picture behind an area of a semi-transparent game picture.

According to the gist, since the picture-combining means changes an area of the game picture so as to be semi-transparent and combines the game picture and the broadcast picture so as to show a picture of a corresponding area of the broadcast picture behind an area of a semi-transparent game picture, the broadcast picture and the game picture can be simultaneously shown even if the game picture is occupying the whole area of the screen of the receiver.

The fifth gist of the present invention is, according to the second gist of the present invention, that the broadcasting-reception means receives the broadcast signal, in which the game program is multiplexed, and further comprises a signal-splitting means to split the game program from the received broadcast signal, and a log data transmission means to transmit log data which indicates content of the broadcast picture reproduced by the picture-reproducing means and the content of the game program executed by the game-execution means.

According to the gist, since the signal-splitting means splits the game program from the received broadcast signal, the game program can be retrieved from the broadcast signal.

According to the gist, since the log data transmission means transmits log data which indicates the content of the broadcast picture reproduced by the picture-reproducing means and the content of the game program executed by the game-execution means, information required to analyze the correlation between the content of the reproduced broadcast picture and the executed game program can be provided.

The sixth gist of the present invention is, according to the first or second gist of the present invention, that the broadcast tuner receives either BS digital broadcasting, digital broadcasting by a ground wave, CS broadcasting or cable television broadcasting.

According to the gist, major broadcasting systems currently being operated can be covered.

The seventh gist of the present invention is, according to the first or second gist of the present invention, that the broadcast tuner receives at least two broadcastings within BS digital broadcasting, digital broadcasting by a ground wave, CS broadcasting and cable television broadcasting.

The eighth gist of the present invention is, according to the first or second gist of the present invention, that the broadcast tuner is integrated with the receiver.

The ninth gist of the present invention is, according to the first or second gist of the present invention, that the game machine is integrated to the broadcast tuner.

According to the gist, wiring between the broadcast tuner and the receiver can be facilitated and the required space around the receiver can be decreased.

The tenth gist of the present invention is a broadcast system comprising a broadcasting apparatus to transmit a broadcast signal that includes a broadcast picture, a game server to store a game program in which the contents of the game are described, and a multiplex unit to multiplex the game program to the broadcast signal.

According to the gist, since the multiplex unit multiplexes the game program to the broadcast signal, the game program can be included in the broadcast signal and can thus be transmitted.

The eleventh gist of the present invention is, according to the tenth gist of the present invention, that the broadcast system broadcasts either BS digital broadcasting, digital broadcasting by a ground wave, CS broadcasting or cable television broadcasting.

According to the gist, major broadcasting systems currently being operated can be covered.

The twelfth gist of the present invention is, according to the tenth gist of the present invention, that the broadcast system further comprises a log data acquisition means to acquire log data indicating the content of the broadcast picture outputted by a broadcast tuner which receives the broadcast signal and content of the game program executed by the broadcast tuner.

According to the gist, since the log data acquisition means acquires log data indicating the content of the outputted broadcast picture and the executed game program by the broadcast tuner, it can be used for analysis of the correlation between the content of the outputted broadcast picture and the executed game program.

The thirteenth gist of the present invention is a broadcast system configured by a broadcasting station, which transmits a broadcast signal containing a broadcast picture and a game program in which the contents of the game are described are multiplexed, a broadcast tuner, which receives the broadcast signal and outputs the broadcast picture or a game picture generated by execution of the game program, and a receiver, which shows the broadcast picture or the game picture outputted by the broadcast tuner, wherein, the broadcast tuner comprising a broadcasting-reception means to receive the broadcast signal, a signal-splitting means to split the game program from the received broadcast signal, a picture-reproducing means to reproduce the broadcast picture from the received broadcast signal, a first picture memory to store the broadcast picture reproduced by the picture-reproducing means, a game memory to store the game program, a game-execution means to execute the game program stored in the game memory, a second picture memory to store the game picture generated by execution of the game program by the game-execution means, and a picture-combining means to combine the broadcast picture stored in the first picture memory and the game picture stored in the second picture memory and to output the combined picture to the receiver, and the broadcasting station comprising, a broadcasting apparatus to transmit the broadcast signal, a game server to store the game program, and a multiplex unit to multiplex the game program to the broadcast signal.

According to the gist, since the picture-combining means combines the broadcast picture stored in the first picture memory and the game picture stored in the second picture memory, and outputs the combined picture to the receiver, the broadcast picture and the game picture can be simultaneously shown on the receiver.

According to the gist, since the game-execution means executes the game program stored in the game memory, a game can be executed without the connection of a game system.

According to the gist, since the multiplex unit multiplexes the game program to the broadcast signal, the game program can be included in the broadcast signal and can thus be transmitted.

The fourteenth gist of the present invention is, according to the thirteenth gist of the present invention, that the picture-combining means of the broadcast tuner combines the game picture and the broadcast picture so as to show a picture of a corresponding area of the broadcast picture on an area of the game picture, which satisfies prescribed conditions.

According to the gist, an ability of combining the broadcast picture and the game picture can be increased.

The fifteenth gist of the present invention is, according to the thirteenth gist of the present invention, that the picture-combining means of the broadcast tuner changes an area of the game picture which satisfies prescribed conditions so as to be semi-transparent and combines the game picture and the broadcast picture so as to show a picture of a corresponding area of the broadcast picture behind an area of a semi-transparent game picture.

According to the gist, the broadcast picture and the game picture can be simultaneously shown even if the game picture is occupying the whole area of the screen of the receiver.

The sixteenth gist of the present invention is, according to the thirteenth gist of the present invention, that the broadcast tuner further comprising a log data transmission means to transmit log data which indicates the content of the broadcast picture reproduced by the picture-reproducing means and the content of the game program executed by the game-execution means, and the broadcasting station further comprising a log data acquisition means to acquire the log data transmitted by the log data transmission means.

According to the gist, since the log data transmission means transmits log data which indicates the content of the broadcast picture reproduced by the picture-reproducing means and the content of the game program executed by the game-execution means, information required to analyze the correlation between the content of the reproduced broadcast picture and the executed game program can be provided.

According to the gist, since the log data acquisition means acquires the log data transmitted by the log data transmission means, it can be used for analysis of the correlation between the content of the outputted broadcast picture and the executed game program.

The seventeenth gist of the present invention is a program for causing a computer to execute, comprising, a broadcasting-reception process to receive a broadcast signal transmitted by a broadcasting station, a picture-reproducing process to reproduce a broadcast picture from the received broadcast signal, a game-execution process to execute a game program in which the contents of the game are described, and a picture-combining process to combine the broadcast picture reproduced by the picture-reproducing process and the game picture generated by the game-execution process, and to output the combined picture to a receiver.

The eighteenth gist of the present invention is, according to the seventeenth gist of the present invention, that the picture-combining process combines the game picture and the broadcast picture so as to show a picture of a corresponding area of the broadcast picture on an area of the game picture, which satisfies prescribed conditions.

The nineteenth gist of the present invention is, according to the seventeenth gist of the present invention, that the picture-combining process changes an area of the game picture which satisfies prescribed conditions so as to be semi-transparent and combines the game picture and the broadcast picture so as to show a picture of a corresponding area of the broadcast picture behind an area of a semi-transparent game picture.

According to the gist, since the picture-combining process combines the broadcast picture stored in the first picture memory and the game picture stored in the second picture memory, and outputs the combined picture to the receiver, the broadcast picture and the game picture can be simultaneously shown on the receiver.

The twentieth gist of the present invention is a computer-readable recording medium in which a program for causing a computer to execute is stored, comprising a broadcasting-reception process to receive a broadcast signal transmitted by a broadcasting station, a picture-reproducing process to reproduce a broadcast picture from the received broadcast signal a game-execution process to execute a game program in which the contents of the game are described, and a picture-combining process to combine the broadcast picture reproduced by the picture-reproducing process and the game picture generated by the game-execution process, and to output the combined picture to a receiver.

The twenty-first gist of the present invention is, according to the twentieth gist of the present invention, that the picture-combining process combines the game picture and the broadcast picture so as to show a picture of a corresponding area of the broadcast picture on an area of the game picture, which satisfies prescribed conditions.

The twenty-second gist of the present invention is, according to the twentieth gist of the present invention, that the picture-combining process changes an area of the game picture which satisfies prescribed conditions so as to be semi-transparent and combines the game picture and the broadcast picture so as to show a picture of a corresponding area of the broadcast picture behind an area of a semi-transparent game picture.

According to the gist, since the picture-combining process combines the broadcast picture stored in the first picture memory and the game picture stored in the second picture memory, and outputs the combined picture to the receiver, the broadcast picture and the game picture can be simultaneously shown on the receiver.

### Brief Description of the Drawings

Fig. 1 is a configuration diagram of a broadcast system including a broadcast tuner according to an embodiment of the invention;
Fig. 2 is a block diagram showing a configuration of the broadcast tuner according to an embodiment of the invention;
Fig. 3 is a configuration diagram of a broadcast system including a broadcast tuner according to an embodiment of the invention;
Fig. 4 is a block diagram showing a configuration of the broadcast tuner according to an embodiment of the invention;
Fig. 5 is a configuration diagram of a broadcast system including a broadcast tuner according to an embodiment of the invention;
Fig. 6 is a block diagram showing a configuration of the broadcast tuner according to an embodiment of the invention;
Fig. 7 is a diagram showing an example of a broadcast picture and a game picture according to an embodiment of the invention;
Fig. 8 is a diagram showing an example of a picture, in which the broadcast picture and the game picture are combined according to an embodiment of the invention;
Fig. 9 is a diagram showing an example of a picture, in which the broadcast picture and the game picture are combined according to an embodiment of the invention;
Fig. 10 is a diagram showing a combining method of the broadcast picture and the game picture according to an embodiment of the invention.

### Best Mode for Carrying Out the Invention

Embodiments of the invention will now be described in detail with reference to the drawings.

### First Embodiment

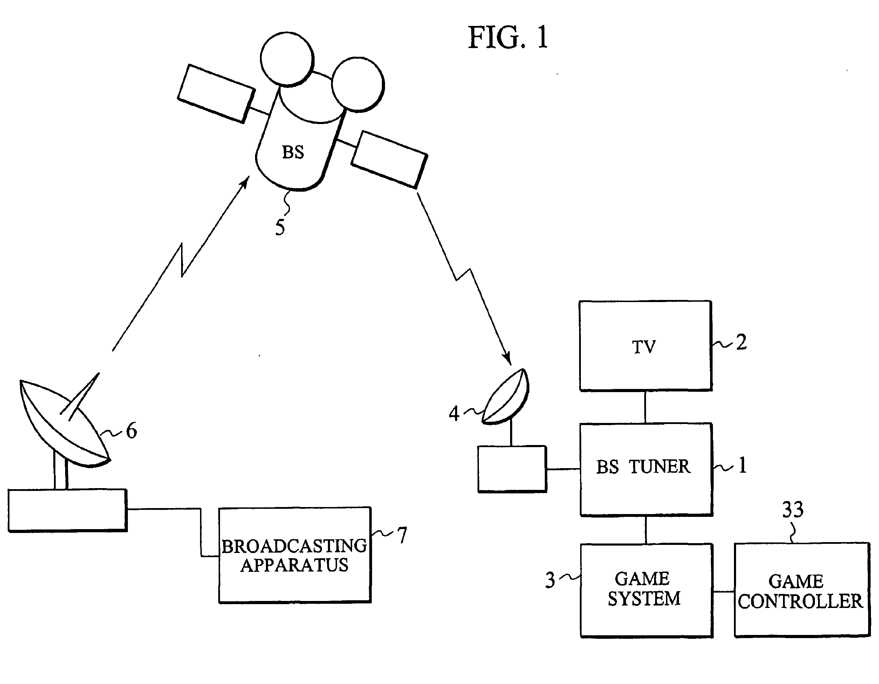

Fig. 1 is a diagram showing configuration of a broadcast system including a broadcast tuner according to the first embodiment of the invention.

A BS tuner 1 is a broadcast tuner for receiving BS broadcasting.

A television 2 is a television set to which the BS tuner 1 is connected, and configures the receiver in this embodiment.

A game system 3 (the game machine) is a home video game system, to which the BS tuner 1 is connected, and which executes a game program and can output a video signal generated by executing the game program.

A game controller 33 is a command input unit connected to the game system 3, to input a command to the game program running on the game system 3.

A reception antenna 4 is an antenna to receive a broadcast signal of the BS broadcasting.

A BS 5 is a geostationary satellite, which relays the broadcast signal of the BS broadcasting and an additional data signal, etc.

A transmission antenna 6 is an antenna to transmit the broadcast signal to the BS 5.

A broadcasting apparatus 7 transmits the broadcast signal that includes the broadcast picture and a sound.

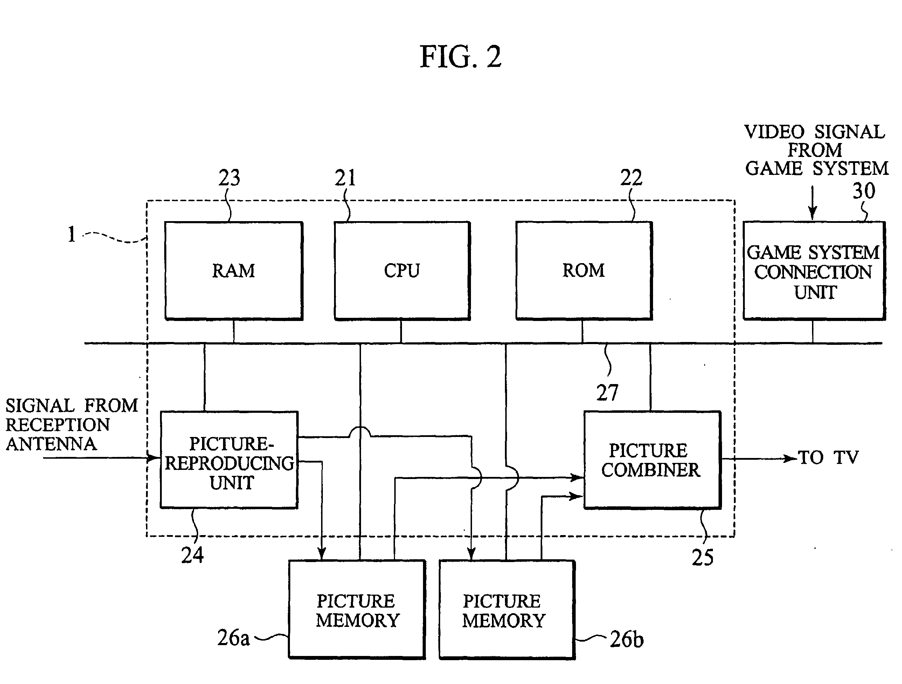

Fig. 2 is a block diagram showing configuration of the BS tuner 1 according to the first embodiment of the invention. In Fig. 2, a CPU 21 is a CPU (Central Processing Unit) which performs control of a signal that the BS tuner 1 transmits and receives.

A ROM 22 is a ROM (Read Only Memory), in which a program for administering operation of the BS tuner 1 is stored, and a RAM 23 is a RAM (Random Access Memory) which is configured by a volatile memory.

A picture-reproducing unit 24 receives the broadcast signal from the reception antenna 4 and reproduces the broadcast picture and sound that can be shown on the television 2 based on the broadcast signal. In this embodiment, the picture-reproducing unit 24 configures the broadcasting-reception means, which receives a broadcast signal that is transmitted by a broadcasting station, and the picture-reproducing means, which reproduces a broadcast picture based on the received broadcast signal.

The picture-reproducing unit 24 according to this embodiment is configured with a high-frequency reception circuit and a de-scrambler that de-scrambles an encrypted broadcast signal, etc.

A picture combiner 25 combines a plurality of pictures by applying logical calculation to the plurality of pictures. In this embodiment, the picture combiner 25 configures the picture-combining means, which combines the broadcast picture and the game picture and outputs the combined picture to the receiver.

Picture memories 26a, 26b memorize and store picture data for one frame, respectively. In this embodiment, the picture memory 26a configures the first picture memory, which stores the broadcast picture that is reproduced by the picture-reproducing means. Further, in this embodiment, the picture memory 26b configures the second picture memory, which stores the game picture.

A data bus 27 is a communication line for transmitting and receiving signals between the CPU 21 and the RAM 23 or the picture-reproducing unit 24, etc.

A game system connection unit 30 is connected to the game system 3 and receives a video signal that the game system 3 outputs. In this embodiment, the game system connection unit 30 configures the game picture-reception means, which receives the game picture generated by a game system from the game system.

Hereinafter, operation of the BS tuner 1 will be described with reference to Fig. 1 and 2. Firstly, operation to show the BS broadcasting on the television 2 will be described.

The CPU 21 retrieves the program stored in the ROM 22 when the BS tuner 1 is turned on. The CPU 21 then executes the retrieved program and performs the setting of the picture-reproducing unit 24 so as to receive the broadcast signal.

The picture-reproducing unit 24 then selects the specified channel from the broadcast signal received by the reception antenna 4 and receives the broadcast signal of the channel according to the control of the CPU 21.

The picture-reproducing unit 24 then demodulates the broadcast picture and audio signal encoded by the MPEG-2 (Moving Picture Experts Group-2) scheme, and decrypts the encrypted broadcast picture. Further, the picture-reproducing unit 24 stores picture data of the decrypted broadcast picture in the picture memory 26a and repeats said storing process with the frame frequency of the broadcast picture.

On the other hand, the CPU 21 instructs the picture combiner 25 to output the picture data stored in the picture memory 26a. The picture combiner 25 acknowledges the instruction of the CPU 21 and retrieves the picture data of the broadcast picture stored in the picture memory 26a with the frame frequency of the broadcast picture. The picture combiner 25 then converts the picture data to a video signal of the NTSC scheme for example. The picture combiner 25 repeats said process and outputs the video signal to the television 2.

By such process, the broadcast picture of the BS broadcasting is shown on the television 2.

Hereinafter, operation in a case where the BS tuner 1 combines the broadcast picture and the game picture, and outputs the combined picture to the television 2 will be described. Since the picture-reproducing unit 24 operates in the same manner as described above, description is omitted.

The game system connection unit 30 receives the video signal outputted by the game system 3 and performs A/D conversion of the video signal according to the control of the CPU 21. Further, the game system connection unit 30 stores picture data of the game picture included in the A/D converted video signal in the picture memory 26b. The game system connection unit 30 repeats said storing process of the picture data of the game picture in the picture memory 26b with the frame frequency of the game picture.

Further, the CPU 21 instructs the picture combiner 25 to combine the picture data stored in the picture memory 26a and the picture memory 26b, respectively, and outputs the combined picture data.

The BS tuner 1 according to this embodiment can provide different conditions, such as "no picture combination", "picture combination (segmentation of screen), "picture combination (overlapping)', or "picture combination (overlapping with semi-transparent)". Incidentally, either condition can be selected by operation according to the menu shown on the television 2 using the game controller 33.

If the CPU 21 instructs to output either condition in "segmentation of screen", "overlapping" or "overlapping with semi-transparent", to the picture combiner 25, the picture combiner 25 retrieves the picture data stored in the picture memory 26a and the picture memory 26b.

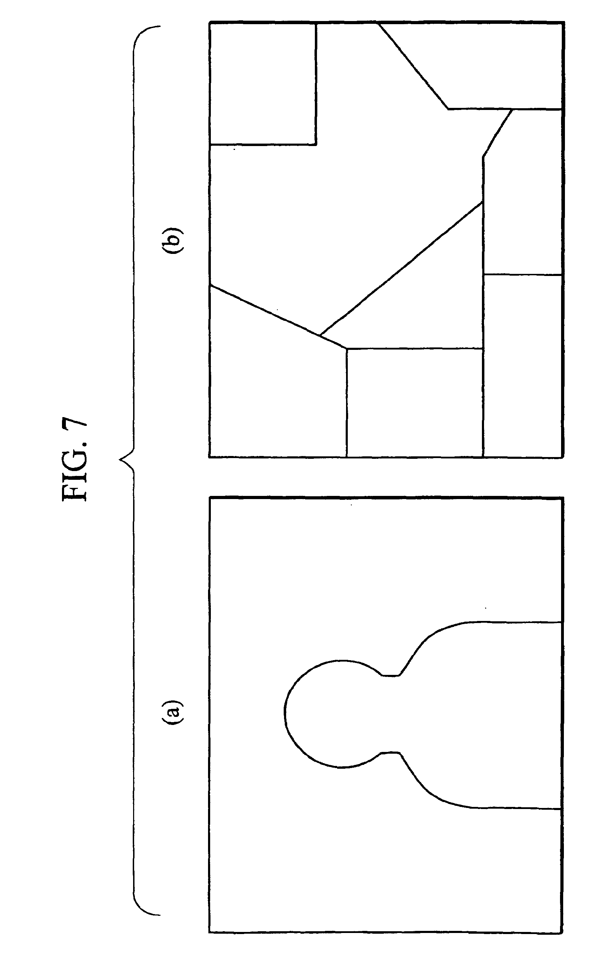

At this point in time, as shown in Fig. 7, the broadcast picture (Fig. 7(a)) and the game picture (Fig. 7(b)) have been stored in the picture memory 26a and the picture memory 26b, respectively. For example, Fig. 7(a) shows the broadcast picture, which a person is located in the middle. Further, Fig. 7(b) shows the game picture, which is in the process of a puzzle game running on the game system 3. Incidentally, the game program in this embodiment means, for example, the puzzle game and the like, in which pieces of the puzzle are to be erased one after another according to the given rules.

The picture combiner 25 then combines the broadcast picture and the game picture according to the instruction of the CPU 21.

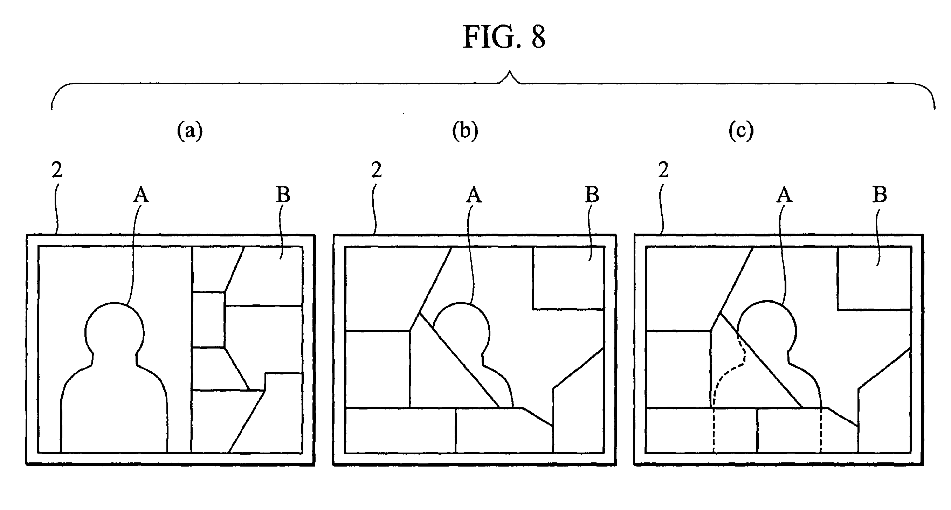

If the picture combiner 25 receives the "segmentation of screen" command from the CPU 21, the picture combiner 25 divides the screen into two areas as shown in Fig. 8(a), and combines the both pictures so as to show the broadcast picture (notation A in Fig. 8(a)) and the game picture (notation B in Fig. 8(a)) on the divided areas, respectively. Although an example in the case where the screen is divided into left and right sides as shown in Fig. 8(a), the screen may also be divided into upper and lower sides for example.

Further, the picture combiner 25 can combine the game picture and the broadcast picture so as to show the picture of the corresponding area of the broadcast picture on the area of game picture, which satisfies prescribed conditions.

Specifically, if the picture combiner 25 receives the "overlapping" command from the CPU 21, as shown in Fig. 8(b), the picture combiner 25 combines both the pictures so as to display that the broadcast picture (notation A in Fig. 8(b)) and the game picture (notation B in Fig. 8(b)) as overlapped.

Here, the picture combiner 25 according to this embodiment combines both the pictures so as to show the broadcast picture in the area, in which only background is shown in the game picture (i.e., the area of the game picture, which satisfies the prescribed conditions), and to show the game picture on the area, in which the objects that configure the game (i.e., the pieces of the puzzle) are located. Accordingly, if the objects that configure the game occupy the whole area, the broadcast picture is not shown at all.

Further, the picture combiner 25 can change the area of the game picture, which satisfies prescribed conditions, so as to be semi-transparent, and can combine the broadcast picture and the game picture so as to show the picture of the corresponding area of the broadcast picture behind the area of the semi-transparent game picture.

Specifically, if the picture combiner 25 receives the "overlapping with semi-transparent" command from the CPU 21, as shown in Fig. 8(c), the picture combiner 25 changes the game picture so as to be semi-transparent (notation B in Fig. 8(c)), and combines the pictures so as to show the broadcast picture behind the semi-transparent game picture (notation A in Fig. 8(c)).

Here, the picture combiner 25 according to this embodiment performs logical calculation so as to change the area where the objects that configure the game (i.e., the pieces of the puzzle) so as to be semi-transparent, and combines the game picture and the broadcast picture. By combining both the pictures as described, the broadcast picture can be shown even when the objects that configure the game are occupying the whole area due to the progress of the game.

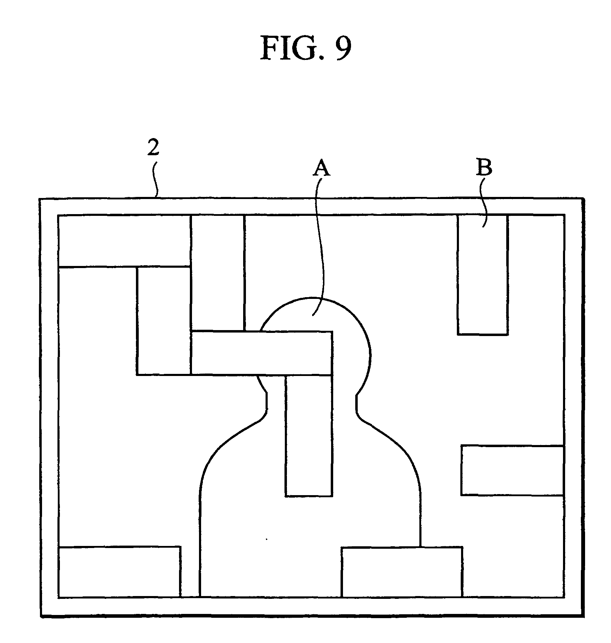

Fig. 9 shows the picture wherein the broadcast picture and the game picture of the puzzle game are combined by the picture combiner 25. In Fig. 9, the notation A indicates the broadcast picture, in which a person is located in the middle, and the notation B indicates a piece of the puzzle. Since the picture combiner 25 outputs the picture shown in Fig. 9, the mechanism in which the broadcast picture would be shown on the television 2 as a piece of the puzzle is erased due to the progress of the game can be achieved.

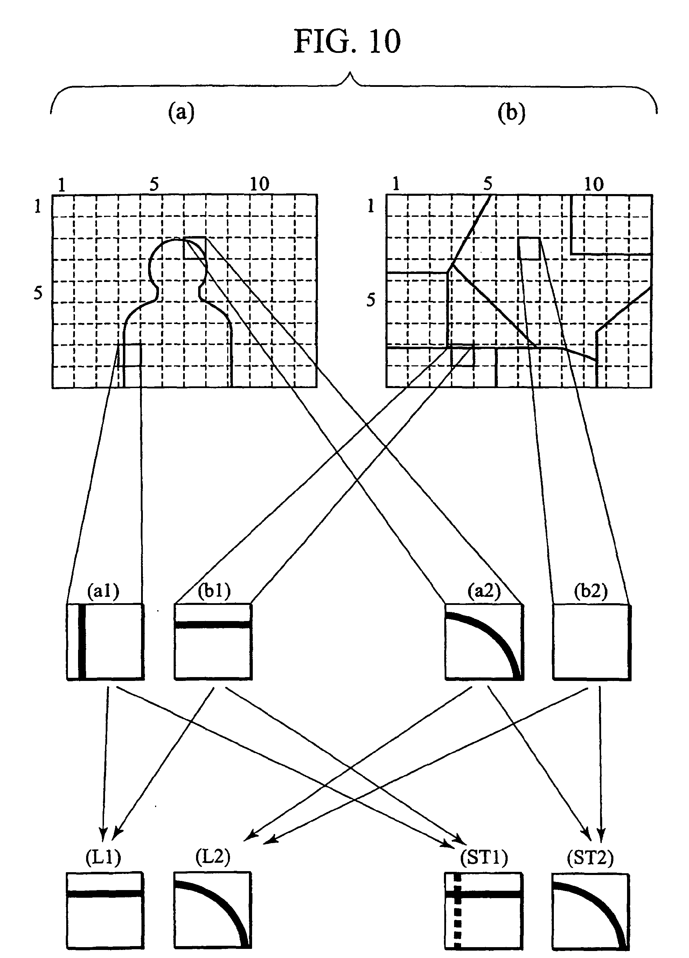

Hereinafter, referring to Fig. 10, the process in a case where the picture combiner 25 combines the pictures stored in the picture memory 26a and picture memory 26b so as to perform the "overlapping" or "overlapping with semi-transparent" command by logical calculation will be described.

The picture combiner 25 first retrieves the picture data shown in Fig. 10(a) and (b) stored in the picture memory 26a and picture memory 26b, respectively. Here, Fig. 10(a) shows the broadcast picture stored in the picture memory 26a, in which a person is located in the middle, and Fig. 10(b) shows the game picture, in which the puzzle game is being played.

The picture combiner 25 then divides the retrieved picture data of Fig. 10(a) and (b) into certain blocks. Incidentally, although the block is enlarged for explanation purposes, a smaller block configured with a certain amount of pixels is actually utilized.

Further, the picture combiner 25 detects the picture information of each block in Fig. 10(a) and Fig. 10(b). (a1) and (b1) of Fig. 10 show expanded pictures of the blocks, which have the same coordinates (4,8). Similarly, (a2) and (b2) of Fig. 10 show expanded pictures of the blocks, which have the coordinates (7,3).

The picture combiner 25 then memorizes the detected picture information and performs the process of the "overlapping" or the "overlapping with semi-transparent" command according to instruction by the CPU 21.

Firstly, the process of the "overlapping" of the game picture and the broadcast picture will be described. If the picture combiner 25 receives the "overlapping" from the CPU 21, the picture combiner 25 according to this embodiment defines the "background of the puzzle game", i.e., the area where no pieces of the puzzle are shown, as the area, which satisfies the prescribed conditions.

The picture combiner 25 processes to output only the picture data of the broadcast picture (a1) block if the picture information, which satisfies the prescribed conditions, i.e., "background of the puzzle game", is detected in the game picture (b1) block.

Further, the picture combiner 25 processes to output only the picture data of the game picture (b1) block if the picture information, which differs from the prescribed conditions, i.e., "the piece of the puzzle" is detected in the game picture (b1) block.

Hereinafter, the process of the "overlapping with semi-transparent" of the game picture and the broadcast picture will be described. If the picture combiner 25 receives the "overlapping with semi-transparent" command from the CPU 21, the picture combiner 25 according to this embodiment defines the area where pieces of the puzzle are shown, as the area, which satisfies the prescribed conditions.

The picture combiner 25 changes the picture data of the game picture (b1) block so as to be semi-transparent if the picture, which satisfies the prescribed conditions, i.e., "the piece of puzzle". is detected in the game picture (b1) block. The picture combiner 25 then processes to output the combined picture so as to show the picture data of the broadcast picture (a1) block behind the picture data of the game picture (b1) block.

Further, the picture combiner 25 processes to output only the picture data of the broadcast picture (a1) block if the picture information, which differs from the prescribed conditions, i.e., "background of the puzzle game", is detected in the game picture (b1) block.

(L1) of Fig. 10 shows the picture of the coordinates (4, 8), in which the process of the "overlapping" of the broadcast picture (a1) block and the game picture (b1) block has been performed by the picture combiner 25.

Here, since the game picture (b1) block differs from the prescribed condition for the "overlapping", which means "background of the puzzle game", the picture combiner 25 processes to output the picture data of the game picture (b1) block. As a result, the piece of the puzzle is shown on (L1).

Further, (ST1) of Fig. 10 shows the picture of the coordinates (4,8), in which the process of the "overlapping with semi-transparent" of the broadcast picture (a1) block and the game picture (b1) block has been performed by the picture combiner 25.

Here, since the game picture (b1) block satisfies the prescribed condition for the "overlapping with semi-transparent", which means "the piece of the puzzle", the picture combiner 25 changes the picture data of the game picture (b1) block so as to be semi-transparent and processes to output the combined picture so as to show the picture data of the broadcast picture (a1) block behind the game picture (b1) block. As a result, the piece of the puzzle, is changed so as to be semi-transparent, and the right arm part of the person, is shown behind the piece.

(L2) and (ST2) of Fig. 10 also show the outputted pictures after similar processes of the (L1) and (ST1) are performed.

The (L2) of Fig. 10 shows the picture of the coordinates (7,3), in which the process of the "overlapping" of the broadcast picture (a2) block and the game picture (b2) block has been performed by the picture combiner 25.

Here, since the game picture (b2) block satisfies the prescribed condition for the "overlapping", which means "background of the puzzle game", the picture combiner 25 processes to output the picture data of the broadcast picture (a2) block. As a result, the left head part of the person is shown on (L2).

Further, (ST2) of Fig. 10 shows a picture of the coordinates (7, 3), in which the process of the "overlapping with semi-transparent" of the broadcast picture (a2) block and the game picture (b2) block has been performed by the picture combiner 25.

Here, since the game picture (b2) block differs from the prescribed condition for the "overlapping with semi-transparent", which means "the piece of the puzzle", the picture combiner 25 processes to output the picture data of the broadcast picture (a2) block. As a result, the left head part of the person is shown on (ST2).

The picture combiner 25 performs the above described processes for the picture of each block, and repeats the processes with the frame frequencies of the game picture and the broadcast picture.

By performing the processes as described, the picture combiner 25 can output the pictures, in which the broadcast picture and the game picture are combined by "overlapping" and "overlapping with semi-transparent", as shown in Fig. 8(b) and (c).

Since the broadcast picture and the game picture can be combined, the BS tuner 1 according to this embodiment can show the broadcast picture transmitted by the broadcasting station and a video game picture simultaneously on the television 2.

### Second Embodiment

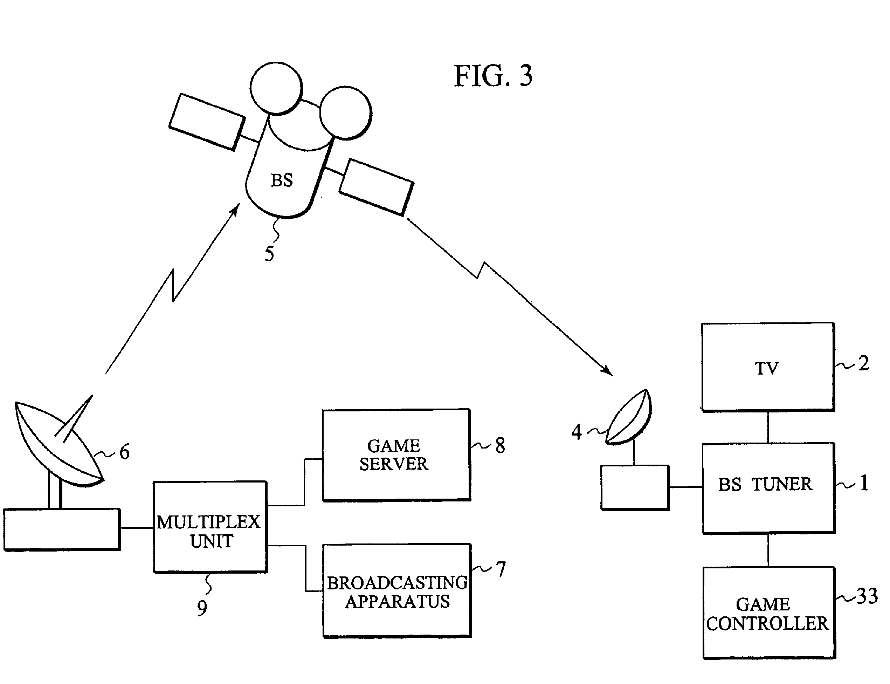

Fig. 3 is a block diagram showing configuration of a broadcast system including a broadcast tuner according to the second embodiment. In Fig. 3, since the same notations are assigned to the same parts, explanation of such parts is omitted.

The difference between the broadcast system shown in Fig. 3 and the broadcast system shown in the first embodiment is that a game server 8, which stores a game program in which the contents of the game are described, and a multiplex unit 9, which multiplexes the game program stored in the game server 8 to the broadcast signal that the broadcasting apparatus 7 transmits, are deployed. Further, a function for executing the game program is installed in the BS tuner 1, and the game controller 33 is connected to the BS tuner 1.

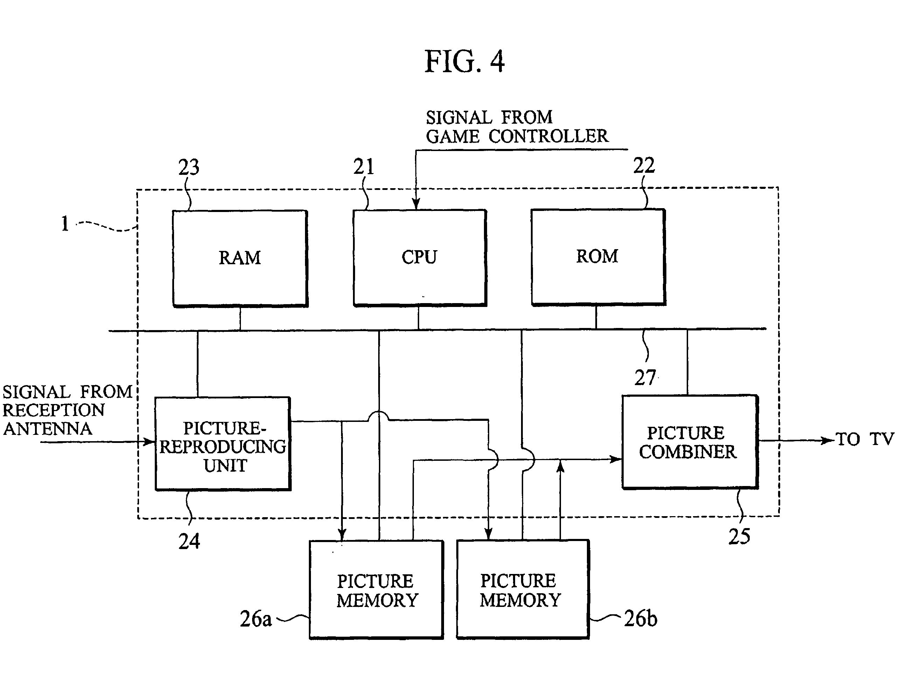

Fig. 4 is a block diagram showing configuration of the BS tuner 1 according to the second embodiment. In Fig. 4, since the same notations are assigned to the same parts, explanation of such parts is omitted.

The difference between the BS tuner 1 shown in Fig. 4 and the BS tuner 1 in the first embodiment is that the BS tuner 1 has a function to execute the game program, and a signal of the game controller 33 is taken in the CPU 21.

Firstly, operation of a transmission side, where the game server 8, multiplex unit 9 and so on according to the second embodiment are deployed, will be described.

The game server 8 stores a game program, which can run on the BS tuner 1.

The broadcasting apparatus 7 transmits the broadcast signal that includes the broadcast picture and sound to the BS 5 via the transmission antenna 6.

The multiplex unit 9 multiplexes the data of the game program stored in the game server 8 to the broadcast signal that is transmitted by the broadcasting apparatus 7. For example, the data carousel scheme that is specified under the MPEG-2 TS (Transport Stream) can be utilized, as a method to multiplex and to transmit the data of the game program together with information of the broadcast picture and sound.

In this embodiment, the transmission antenna 6, the broadcasting apparatus 7, the game server 8 and the multiplex unit 9 are deployed in the broadcasting station.

Hereinafter, referring to Fig. 4, operation of the reception side, e.g., the BS tuner 1 will be described.

The picture-reproducing unit 24 splits the broadcast signal that is received via the reception antenna 4 into the broadcast picture including sound and the game program. In this embodiment, the picture-reproducing unit 24 configures the signal-splitting means. Further, the picture-reproducing unit 24 stores the split data of the game program in the RAM 23.

The RAM 23 according to this embodiment configures the game memory that stores the game program in which the contents of game are described.

Incidentally, the RAM 23 according to this embodiment may be configured by NVRAM (Non Volatile RAM) in which EEPROM (Electrically Erasable Programmable ROM) is integrated. Accordingly, the data of the game program stored in the RAM 23 can be kept even if the power of the BS tuner 1 is turned off.

Further, a slot for connecting a card type EEPROM or an interface that can communicate with an external memory device may be integrated in the BS tuner 1, and the game program may be stored in the EEPROM connected to the slot or the external memory device connected to the interface.

By storing the game program in the external memory device, the game program can be executed on the other machines that can execute the game program, e.g., a PC and a game system.

On the other hand, the broadcast picture split by the picture-reproducing unit 24 is stored in the picture memory 26a through an operation similar to the first embodiment.

In this embodiment, the CPU 21 configures the game-execution means, which executes the game program in which the contents of the game are described. The CPU 21 receives a signal inputted by the game controller 33 and executes the game program according to the received signal. Further, the CPU 21 stores a game picture generated by execution of the game program in the picture memory 26b.

The picture combiner 25, as described in the first embodiment, retrieves and combines the picture data of the picture memory 26a and the picture memory 26b, and then outputs the combined picture to the television 2.

Incidentally, the game program according to this embodiment may be an adventure type of game, i.e., a role-playing game in which the player of the game plays the hero and solves given challenges in the game, besides the puzzle game. Further, the game program according to this embodiment can only be retrieved from the broadcast signal transmitted by the broadcasting apparatus 7.

Moreover, the broadcasting apparatus 7 transmits a different types of game programs that are multiplexed to the broadcast signal depending on the timeframe so that the player can select the requested game program.

The game program that is multiplexed to the broadcast signal and transmitted may also be retrieved at the BS tuner 1 by the method shown below.
(1) The player selects the identification number of the appropriate game using the game controller 33 based on the program timetable delivered in advance.
(2) Guidance is outputted on the screen of the television 2 at or about the time of transmission of the game program, which corresponds to the identification number that the player selected.
(3) The player selects the channel on which the appropriate game program is to be transmitted and the BS tuner 1 splits the selected game program from the broadcast signal and stores it in the RAM 23.
(4) The BS tuner 1 which has stored the game programs retrieved through the above described steps (1) - (3) in the RAM 23, splits only the data which varies daily, e.g., the earned scores, from the broadcast signal, and stores the data in the RAM 23.
(5) The BS tuner 1 stores game programs in the RAM 23 in advance and further, stores only the required data, etc. regarding the program by splitting it from the broadcast signal.

As described, the BS tuner 1 can make the television 2 show the broadcast picture transmitted by the broadcasting station and the picture of the video game simultaneously. In addition, since the BS tuner 1 according to this embodiment can retrieve the game program multiplexed to the broadcast signal, the player can easily acquire the game program and play the game.

### Third Embodiment

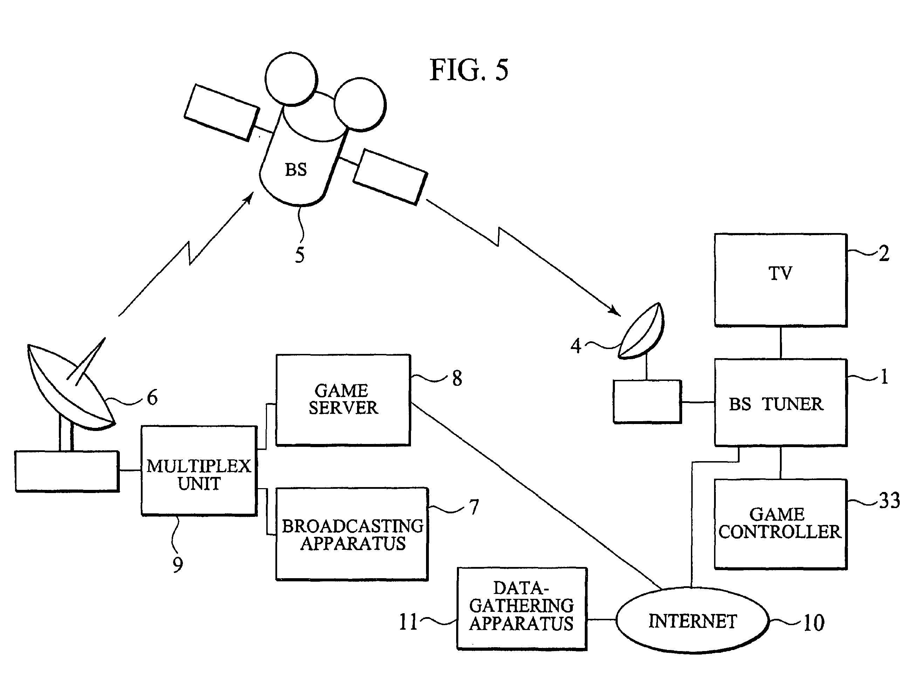

Fig. 5 is a block diagram showing configuration of the broadcast system including a broadcast tuner according to the third embodiment. In Fig. 5, since the same notations are assigned to the same parts, explanation of such parts is omitted.

The difference between the broadcast system shown in Fig. 5 and the broadcast system in the second embodiment is that the BS tuner 1 and the game server 8 are connected to the Internet 10. Further, there is a data-gathering apparatus 11, which gathers the log data of contents regarding the outputted broadcast picture and executed game program of the BS tuner 1.

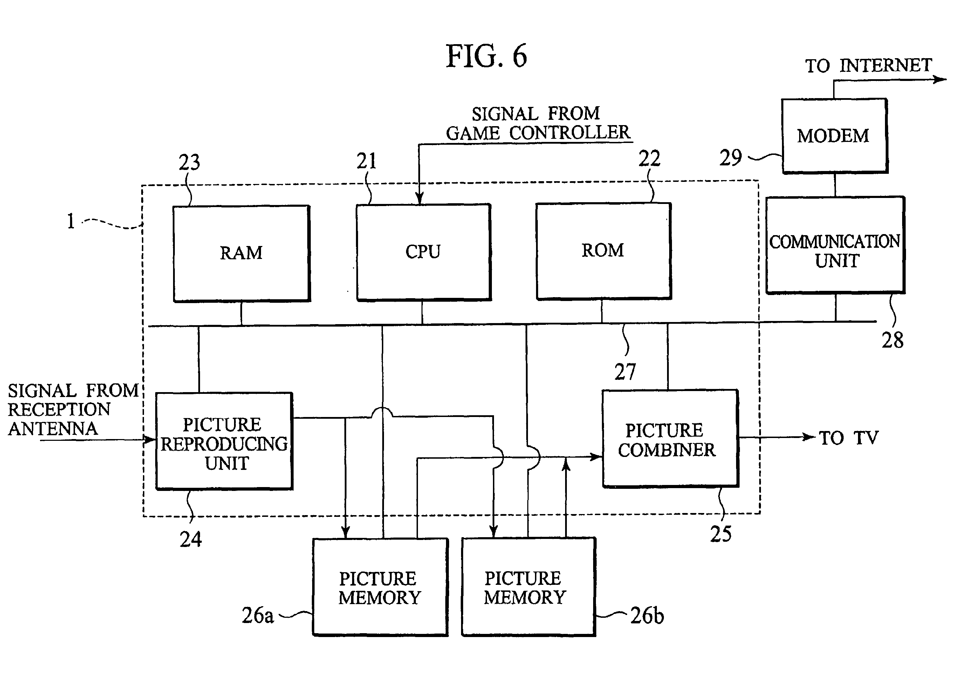

Fig. 6 is a block diagram showing configuration of the BS tuner 1 according to the third embodiment. In Fig. 6, since the same notations are assigned to the same parts, explanation of such parts is omitted.

The difference between the BS tuner 1 shown in Fig. 6 and the BS tuner 1 in the second embodiment is that a communication unit 28 and a modem 29 for connecting to the Internet 10 are equipped.

Incidentally, the BS tuner 1, the game server 8 and the data-gathering apparatus 11 may be connected by a private leased circuit or a public network instead of the Internet 10. In this case, a digital circuit termination unit (DSU) or a terminal adapter (TA), etc. can be utilized instead of the modem 29.

Firstly, operation of the BS tuner 1 according to the third embodiment and the data-gathering apparatus 11 will be described.

The CPU 21 can store log data in the RAM 23 including the channel number and the time range for the selected channel, whose broadcast pictures were reproduced by the picture-reproducing unit 24, and can store log data including the name of the game program executed by the CPU 21.

The communication unit 28 retrieves the log data stored in the RAM 23 at the prescribed time (e.g., when it is turned on after the date changes), and transmits the retrieved data to the data-gathering apparatus 11 via the Internet 10. In this embodiment, the communication unit 28 configures the log data transmission means, which transmits log data indicating the content of the broadcast picture that is reproduced by the picture-reproducing means and the content of the game program that is executed by the game-execution means.

In this embodiment, the data-gathering apparatus 11 configures the log data acquisition means, which acquires the log data transmitted by the BS tuner 1. The data stored in the data-gathering apparatus 11 can be analyzed by the computer system that executes an analytical type of application software providing a method of data mining, e.g., OLAP (Online Analytical Processing), together with attributes of the viewer, e.g., age, sex, hobbies and job.

By executing such analysis, correlation between the type of viewed broadcasting program and the type of the executed game program can be found. Incidentally, this correlation means, for example, that after a certain sport program is broadcasted, the probability of male workers in their twenties playing the game for the sport is higher than other viewers.

Further, the computer system, which stores the attributes of the viewers and executes the above analytical type of application software, may incorporate the function of the data-gathering apparatus 11 and may provide its function.

Based on the analytical result provided by the above described analytical method, the operator of the broadcasting station can select a game program whose probability of execution is high, and can make the game server 8 provide the selected game program.

Incidentally, in the first through third embodiments described above, although the embodiment in the case where the BS digital broadcasting is utilized, digital broadcasting by a ground wave, CS broadcasting or CATV broadcasting may also be utilized. Further, within the BS digital broadcasting, digital broadcasting by a ground wave, CS broadcasting and CATV broadcasting, at least two broadcast tuners may be unified into one tuner. Moreover, the broadcast tuner may be integrated in a television.

In addition, the game system 3 may be integrated into the broadcast tuner.

Further, the program to achieve the functions shown in Fig. 2, 4 and 6 may be recorded in a computer readable recording medium, and the program recorded in the recording medium may be retrieved and executed by a computer.

Incidentally, the computer described here includes an operating system and hardware including peripheral devices, etc. The computer further includes the function to open web pages (homepages) that are built by HTML (Hyper Text Markup Language) via the Internet, and the function to display the web pages using a browser.

In addition, the "computer readable recording medium" means an external memory device, such as a flexible disk, magneto-optic disk, ROM and CD-ROM for example, and a hard disk equipped in a computer. Further, the "computer readable recording medium" includes the program being kept for a certain period of time in the RAM, etc. of the computer in a case where the program is transmitted via a communication network, e.g., the Internet, or a communication circuit, e.g., a telephone circuit.

Further, the program may be transmitted to the other computers via transmission medium. For example, a communication network, e.g., the Internet, and a communication circuit, e.g., a telephone circuit, can be listed as the transmission medium.

Moreover, the program may partially achieve the functions described above, and all the functions described above are achieved in combination with a part of the program that has already been stored in the computer, i.e., the program may be a differential file (differential program).

### Function and Effect of the Broadcast Tuner and the Broadcast system according to the Embodiments

According to the broadcast tuner and the broadcast system of the embodiments, since the picture combiner 25 combines the broadcast picture stored in the picture memory 26a and the game picture stored in the picture memory 26b, and outputs the combined picture to the television 2, the broadcast picture and the game picture can be simultaneously shown on the television 2.

Further, according to the broadcast tuner and the broadcast system of the embodiments, since the CPU 21 executes the game program stored in the RAM 23, the game can be executed without connection of the game system 3.

Moreover, according to the broadcast tuner and the broadcast system of the embodiments, since the multiplex unit 9 multiplexes the game program to the broadcast signal, the player can easily retrieve the appropriate game program and play the game program using the broadcast tuner because the player does not need to buy the game program at a store. According to the broadcast tuner and the broadcast system of the embodiments, preparing the game program, which can only be retrieved from the broadcast signal, contributes to the operator of the broadcasting station that transmits the broadcast signal to attract the viewers.

The picture combiner 25, in the broadcast tuner and the broadcast system of the embodiments, combines the game picture and the broadcast picture so as to show the picture of the corresponding area of the broadcast picture on the area of the game picture, which satisfies prescribed conditions. Further, the picture combiner 25, in the broadcast tuner and the broadcast system of the embodiments, changes the area of the game picture, which satisfies prescribed conditions, so as to be semi-transparent, and combines the broadcast picture and the game picture so as to show the picture of the corresponding area of the broadcast picture behind the area of the semi-transparent game picture.

According to the broadcast tuner and the broadcast system of the embodiments, an ability of combining the broadcast picture and the game picture can be increased, and the game picture and the broadcast picture can therefore be shown on the television 2 regardless of the status of the game picture.

Further, the broadcast tuner and the broadcast system of the embodiments have the communication unit 28, which transmits log data regarding the content of the broadcast picture reproduced by the picture-reproducing unit 24 and the content regarding the game program executed by the CPU 21, the modem 29 and the data-gathering apparatus 11.

According to the broadcast tuner and the broadcast system of the embodiments, the operator of the broadcasting station from which the broadcast signal transmits can recognize the viewer ratings, issue a direct mail based on the viewer's wishes, or examine the content of the broadcasting program based on the analytical result of the correlation between the content of the broadcasted program and the executed game program.

### Industrial Applicability

As described above, according to the present invention, a broadcast tuner and a broadcast system, which are capable of showing a broadcast picture transmitted by a broadcasting station and a game picture of a video game system simultaneously on a television.

## Claims

1. A broadcast tuner comprising:
a broadcasting-reception means to receive a broadcast signal transmitted by a broadcasting station;
a picture-reproducing means to reproduce a broadcast picture from the received broadcast signal;
a first picture memory to store the broadcast picture reproduced by the picture-reproducing means;
a game picture-reception means to receive a game picture generated by a game machine which executes a game program in which the contents of the game are described;
a second picture memory to store the game picture; and
a picture-combining means to combine the broadcast picture stored in the first picture memory and the game picture stored in the second picture memory, and to output the combined picture to a receiver.

2. A broadcast tuner comprising:
a broadcasting-reception means to receive a broadcast signal transmitted by a broadcasting station;
a picture-reproducing means to reproduce a broadcast picture from the received broadcast signal;
a first picture memory to store the broadcast picture reproduced by the picture-reproducing means;
a game memory to store a game program in which the contents of the game are described;
a game-execution means to execute the game program stored in the game memory;
a second picture memory to store a game picture generated by execution of the game program by the game-execution means; and
a picture-combining means to combine the broadcast picture stored in the first picture memory and the game picture stored in the second picture memory, and to output the combined picture to a receiver.

3. The broadcast tuner according to Claim 1 or 2, wherein, the picture-combining means combines the game picture and the broadcast picture so as to show a picture of a corresponding area of the broadcast picture on an area of the game picture, which satisfies prescribed conditions.

4. The broadcast tuner according to Claim 1 or 2, wherein, the picture-combining means changes an area of the game picture which satisfies prescribed conditions so as to be semi-transparent, and combines the game picture and the broadcast picture so as to show a picture of a corresponding area of the broadcast picture behind an area of a semi-transparent game picture.

5. The broadcast tuner according to Claim 2, wherein, the broadcasting-reception means receives the broadcast signal, in which the game program is multiplexed, and further comprising:
a signal-splitting means to split the game program from the received broadcast signal; and
a log data transmission means to transmit log data which indicates the content of the broadcast picture reproduced by the picture-reproducing means and the content of the game program executed by the game-execution means.

6. The broadcast tuner according to Claim 1 or 2, wherein, the broadcast tuner receives either BS digital broadcasting, digital broadcasting by a ground wave, CS broadcasting or cable television broadcasting.

7. The broadcast tuner according to Claim 1 or 2, wherein, the broadcast tuner receives at least two broadcastings within BS digital broadcasting, digital broadcasting by a ground wave, CS broadcasting and cable television broadcasting.

8. The broadcast tuner according to Claim 1 or 2, wherein, the broadcast tuner is integrated in the receiver.

9. The broadcast tuner according to Claim 1, the game machine is integrated in the broadcast tuner.

10. A broadcast system comprising:
a broadcasting apparatus to transmit a broadcast signal that includes a broadcast picture;
a game server to store a game program in which the contents of the game are described; and
a multiplex unit to multiplex the game program to the broadcast signal.

11. The broadcast system according to Claim 10, wherein, the broadcast system broadcasts either BS digital broadcasting, digital broadcasting by a ground wave, CS broadcasting or cable television broadcasting.

12. The broadcast system according to Claim 10, further comprising a log data acquisition means to acquire log data indicating the content of the broadcast picture outputted by a broadcast tuner which receives the broadcast signal and the content of the game program executed by the broadcast tuner.

13. A broadcast system comprising:
a broadcast tuner to receive a broadcast signal, in which a broadcast picture and a game program in which the contents of the game are described are multiplexed, from a broadcasting station, and to output the broadcast picture or a game picture generated by execution of the game program;
a game-execution means to execute the game program received by the broadcast tuner; and
a receiver to show the broadcast picture or the game picture outputted by the broadcast tuner.

14. The broadcast system according to Claim 13, wherein, the broadcast tuner further comprises a log data transmission means to transmit log data which indicates the content of the broadcast picture outputted by the broadcast tuner and the content of the game program executed by the game-execution means.

15. A broadcast system comprising:
a broadcasting station to transmit a broadcast signal, in which a broadcast picture and a game program in which the contents of the game are described are multiplexed;
a broadcast tuner to receive the broadcast signal and to output the broadcast picture or a game picture generated by execution of the game program;
a game-execution means to execute the game program received by the broadcast tuner; and
a receiver to show the broadcast picture or the game picture outputted by the broadcast tuner.

16. The broadcast system according to Claim 15, wherein, the broadcast tuner further comprises a log data transmission means to transmit log data which indicates the content of the broadcast picture outputted by the broadcast tuner and the content of the game program executed by the game-execution means, and
the broadcasting station further comprising a log data acquisition means to acquire the log data transmitted by the log data transmission means.

17. A broadcast system configured by a broadcasting station, which transmits a broadcast signal in which a broadcast picture and a game program in which the contents of the game are described are multiplexed, a broadcast tuner, which receives the broadcast signal and outputs the broadcast picture or a game picture generated by execution of the game program, and a receiver, which shows the broadcast picture or the game picture outputted by the broadcast tuner, wherein:
the broadcast tuner comprising:
a broadcasting-reception means to receive the broadcast signal;
a signal-splitting means to split the game program from the received broadcast signal;
a picture-reproducing means to reproduce the broadcast picture from the received broadcast signal;
a first picture memory to store the broadcast picture reproduced by the picture-reproducing means;
a game memory to store the game program;
a game-execution means to execute the game program stored in the game memory;
a second picture memory to store the game picture generated by execution of the game program by the game-execution means; and
a picture-combining means to combine the broadcast picture stored in the first picture memory and the game picture stored in the second picture memory, and to output the combined picture to the receiver, and
the broadcasting station comprising:
a broadcasting apparatus to transmit the broadcast signal;
a game server to store the game program; and
a multiplex unit to multiplex the game program to the broadcast signal.

18. The broadcast system according to Claim 17, wherein, the picture-combining means of the broadcast tuner combines the game picture and the broadcast picture so as to show a picture of a corresponding area of the broadcast picture on an area of the game picture, which satisfies prescribed conditions.

19. The broadcast system according to Claim 17, wherein, the picture-combining means of the broadcast tuner changes an area of the game picture which satisfies prescribed conditions so as to be semi-transparent and combines the game picture and the broadcast picture so as to show a picture of a corresponding area of the broadcast picture behind an area of a semi-transparent game picture.

20. The broadcast system according to Claim 17, wherein, the broadcast tuner further comprises a log data transmission means to transmit log data which indicates the content of the broadcast picture reproduced by the picture-reproducing means and the content of the game program executed by the game-execution means, and
the broadcasting station further comprising a log data acquisition means to acquire the log data transmitted by the log data transmission means.

21. A program for causing a computer to execute, comprising:
a broadcasting-reception process to receive a broadcast signal transmitted by a broadcasting station;
a picture-reproducing process to reproduce a broadcast picture from the received broadcast signal;
a game-execution process to execute a game program in which the contents of the game are described; and
a picture-combining process to combine the broadcast picture reproduced by the picture-reproducing process and the game picture generated by the game-execution process, and to output the combined picture to a receiver.

22. The program according to Claim 21, wherein, the picture-combining process combines the game picture and the broadcast picture so as to show a picture of a corresponding area of the broadcast picture on an area of the game picture, which satisfies prescribed conditions.

23. The program according to Claim 21, wherein, the picture-combining process changes an area of the game picture which satisfies prescribed conditions so as to be semi-transparent and combines the game picture and the broadcast picture so as to show a picture of a corresponding area of the broadcast picture behind an area of a semi-transparent game picture.

24. A computer-readable recording medium in which a program for causing a computer to execute is stored, comprising:
a broadcasting-reception process to receive a broadcast signal transmitted by a broadcasting station;
a picture-reproducing process to reproduce a broadcast picture from the received broadcast signal;
a game-execution process to execute a game program in which the contents of the game are described; and
a picture-combining process to combine the broadcast picture reproduced by the picture-reproducing process and the game picture generated by the game-execution process, and to output the combined picture to a receiver.

25. The computer-readable recording medium according to Claim 24, wherein, the picture-combining process combines the game picture and the broadcast picture so as to show a picture of a corresponding area of the broadcast picture on an area of the game picture, which satisfies prescribed conditions.

26. The computer-readable recording medium according to Claim 24, wherein, the picture-combining process changes an area of the game picture which satisfies prescribed conditions so as to be semi-transparent and combines the game picture and the broadcast picture so as to show a picture of a corresponding area of the broadcast picture behind an area of a semi-transparent game picture.
